# EUROPÄISCHE PATENTSCHRIFT

(11) **EP 1 625 367 B1**
(45) Veröffentlichungstag und Bekanntmachung des Hinweises auf die Patenterteilung: **04.10.2006**
(21) Anmeldenummer: 04739229.5
(22) Anmeldetag: 17.05.2004
(51) Int. Cl.: G01G 19/03

(54) **VERFAHREN UND VORRICHTUNG ZUM WIEGEN VON PRODUKTEN**
METHOD AND DEVICE FOR WEIGHING PRODUCTS
PROCEDE ET DISPOSITIF DE PESE DE PRODUITS

(30) Priorität: 19.05.2003 DE 10322504
(43) Veröffentlichungstag der Anmeldung: 15.02.2006
(73) Patentinhaber: Mettler-Toledo Garvens GmbH, 31180 Giesen (DE)
(72) Erfinder: BECK, Harald, 35415 Pohlheim (DE); KREIMEYER, Rolf, 30926 Seelze (DE)
(74) Vertreter: Leinweber & Zimmermann
(86) Internationale Anmeldenummer: PCT/EP2004/005299
(87) Internationale Veröffentlichungsnummer: WO 2004/102135

(56) Entgegenhaltungen:
- EP-A- 0 507 957
- WO-A-99/36752
- GB-A- 2 228 092
- US-A- 5 635 679

## Beschreibung

Die Erfindung bezieht sich auf ein Verfahren zum Wiegen von Produkten, bei dem die Produkte einzeln einer Meßstrecke aufgegeben, längs der Meßstrecke transportiert, dabei in regelmäßigen Abständen Gewichtswerte erfaßt und zur Bestimmung des Wägeergebnisses aus den auf einer Teilstrecke erfaßten Gewichtswerten Mittelwerte und Varianzen gebildet werden, sowie auf eine zur Durchführung dieses Verfahrens geeignete Vorrichtung.

Mit derartigen Verfahren werden die Produkte während ihres Transports längs der Meßstrecke dynamisch verwogen. Hierdurch läßt sich ein hoher Durchsatz erreichen, weil bei diesem dynamischen Betrieb im Unterschied zu einer statischen Waage das Einschwingen auf einen stabilen Endwert nicht abgewartet wird. Allerdings ist die Unschärfe der dynamischen Verwägung im allgemeinen um so größer, je kürzer der hierfür verfügbare Zeitabschnitt ist. Auf die Produkte wirken während ihres Transports längs der Meßstrecke zahlreiche Störungen ein, die Schwingungen hervorrufen und zu entsprechenden Schwankungen der erfaßten Gewichtswerte führen.

Nach derartigen Verfahren arbeitende bekannte Waagen, die als Kontrollwaagen bezeichnet werden (Firmenprospekt Garvens Automation GmbH oder EP 0 507 957 A1) weisen deshalb eine Filtereinrichtung auf, die dafür vorgesehen ist, aus den bei der dynamischen Wägung jedes Produktes erfaßten Gewichtswerten einen dem wahren Gewichtswert möglichst nahekommenden Mittelwert zu bilden.

Bei einem bekannten Verfahren der eingangs genannten Art (US-A-5 635 679) durchläuft ein Prüfgewicht die Meßstrecke in einer Anzahl von Wiederholungen. Bei jedem Durchlauf werden die Gewichtswerte an denselben vorgegebenen Meßpunkten ein und derselben vorbestimmten Teilstrecke erfaßt und für jeden Meßpunkt die Varianz bzw. die Standardabweichung für alle Durchläufe gebildet. Zur Bestimmung des endgültigen Wägeergebnisses wird derjenige Meßpunkt ausgewählt, an dem die solchermaßen bestimmte Varianz ein Minimum annimmt. Jedoch liefert die Bestimmung des Wägeergebnisses auf der Grundlage der einzigen vorbestimmten Teilstrecke nicht immer das Optimum bezüglich der Unschärfe des Wägeergebnisses.

Der Erfindung liegt die Aufgabe zugrunde, ein Verfahren der eingangs genannten Art hinsichtlich dieser Mittelwertsbildung zu optimieren und eine zur Durchführung dieses Verfahrens geeignete Vorrichtung anzugeben.

Erfindungsgemäß wird diese Aufgabe hinsichtlich des Verfahrens dadurch gelöst, daß aus einer Anzahl unterschiedlicher Teilstrecken, für deren jede die Varianz der darauf erfaßten Gewichtswerte gebildet wird, die die kleinste Varianz aufweisende Teilstrecke für die Bestimmung des Wägeergebnisses ausgewählt wird.

Dem erfindungsgemäßen Verfahren liegt die Erkenntnis zugrunde, daß entgegen üblicher Erwartung die maximale Ausnutzung der längs der Meßstrecke erfaßten Gewichtswerte bei der Mittelwertsbildung nicht immer die besten Ergebnisse bezüglich der Unschärfe des Wägeergebnisses liefert. Beispielsweise neigen Produkte wie Gläser oder Dosen dazu, durch Aufprall auf die Meßstrecke Erschütterungen einzutragen, die nur langsam abklingen. Ferner können längs der Meßstrecke auch Störspitzen in den gemessenen Gewichtswerten auftreten. All dies wirkt sich in einer erhöhten Standardabweichung aus. Indem erfindungsgemäß für unterschiedliche Teilstrecken jeweils die Varianz der erfaßten Gewichtswerte bestimmt wird, kann die die kleinste Varianz aufweisende Teilstrecke aufgefunden und für die Feststellung des Wägeergebnisses ausgewählt werden. Dabei werden nur die längs der ausgewählten Teilstrecke erfaßten Gewichtswerte zur Mittelwertsbildung herangezogen und dadurch die Unschärfe des Wägeverfahrens optimiert.

Vorteilhaft wird das erfindungsgemäße Verfahren derart ausgeführt, daß eine Teilstrecke voreingestellt und daraus die unterschiedlichen Teilstrecken durch zufällige Variationen gewonnen werden. Dies ermöglicht es besonders einfach, die Auffindung der die kleinste Varianz aufweisenden Teilstrecke zu automatisieren. Dabei kann der Benutzer durch die von ihm vorgenommene Voreinstellung seine empirische Erfahrung einbringen und insbesondere einen nach seiner Sicht wünschenswerten Rahmen für die Größe der anzuwendenden Teilstrecken vorgeben.

Weiter ist in einer vorteilhaften Ausführungsform des erfindungsgemäßen Verfahrens vorgesehen, daß für die unterschiedlichen Teilstrecken eine untere Schranke für den Abstand zwischen ihrem Anfang und dem Anfang der Meßstrecke vorgegeben wird. Insbesondere wird diese untere Schranke derart vorgegeben, daß der Abstand zwischen dem Anfang der Meßstrecke und dem Anfang der Teilstrecke größer ist als die Länge Produkts in der Transportrichtung. Dadurch wird sichergestellt, daß nur solche Gewichtswerte in Betracht gezogen werden, bei deren Erfassung sich das Produkt in seiner vollen Länge auf der Meßstrecke befindet. Ebenso kann es vorteilhaft sein, daß für die unterschiedlichen Teilstrecken eine obere Schranke für deren Länge vorgegeben wird. Die Vorgabe einer solchen Längenbeschränkung hat den Vorteil, daß bei der Ermittlung der optimalen Teilstrecke keine Teilstrecken von so hoher Länge herangezogen werden, daß sie von vorneherein als optimal nicht in Betracht kommen. Dies schließt allerdings nicht aus, Längen zuzulassen, welche die physikalische Länge der Meßstrecke überschreiten. Sinnvoll kann dies bei der Mittelwertbildung mit Hilfe von Filtern sein, die verzögert auf den Endwert einschwingen und ausschwingen. Hierdurch kann zwar eine Verringerung des Wägeergebnisses auftreten, was sich jedoch unschwer durch geeignete Rechenlogarithmen ausgleichen läßt.

Im Rahmen der Erfindung ist auch vorgesehen, daß die Teilstrecken mit Hilfe der konstanten Transportgeschwindigkeit der Produkte durch eine Laufzeit längs der Meßstrecke ausgedrückt werden und/oder daß die Schranken mit Hilfe der konstanten Transportgeschwindigkeit der Produkte durch eine Laufzeit längs der Meßstrecke ausgedrückt werden. Diese Maßnahmen sind insbesondere dann zweckmäßig, wenn die Gewichtswerte mit einem Wandler erfaßt werden, der die Gewichtswerte in regelmäßigen Zeitabständen, d.h. mit einer festen Frequenz liefert. Eine typische Frequenz für Wägezellen ist beispielsweise 1200 Hz. Die Darstellung mittels der jeweiligen Laufzeit ist auch im Hinblick auf die Mittelwertbildung durch einen Filter zweckmäßig, dessen Filterlänge durch eine Filterzeit ausgedrückt wird.

Eine zur Lösung der der Erfindung zugrundeliegenden Aufgabe geeignete Vorrichtung zum Wiegen von Produkten mit einem als Meßstrecke dienenden Förderband, dem die Produkte einzeln aufgegeben und auf dem sie in einer Förderrichtung transportiert werden, einer Wägezelle, auf der das Förderband abgestützt ist und die in regelmäßigen Zeitabständen Gewichtswerte erfaßt, einer auf das Förderband ausgerichteten Sensoreinrichtung, welche jeweils das beim Transport durch ihren Erfassungsbereich hindurchtretende vordere und hintere Ende eines Produkts erfaßt, und einer Filtereinrichtung zur Bildung eines Mittelwertes aus den auf einer Teilstrecke erfaßten Gewichtswerten, ist erfindungsgemäß dadurch gekennzeichnet, daß der Filtereinrichtung eine Auswahleinrichtung zugeordnet ist, von der für eine Anzahl unterschiedlicher Teilstrecken jeweils die Varianz der erfaßten Gewichtswerte bestimmt und die die kleinste Varianz aufweisende Teilstrecke für das Wägeergebnis ausgewählt wird.

Zweckmäßige Ausgestaltungen der erfindungsgemäßen Vorrichtung sind in den abhängigen Ansprüchen 9 und 10 angegeben.

In der folgenden Beschreibung wird die Erfindung unter Bezugnahme auf die Zeichnung näher erläutert. Hierin zeigen:
- Fig. 1: eine schematische Ansicht einer Kontrollwaage, und
- Fig. 2: eine vergrößerte schematische Ansicht des auf einer Wägezelle abgestützten Förderbands dieser Kontrollwaage.

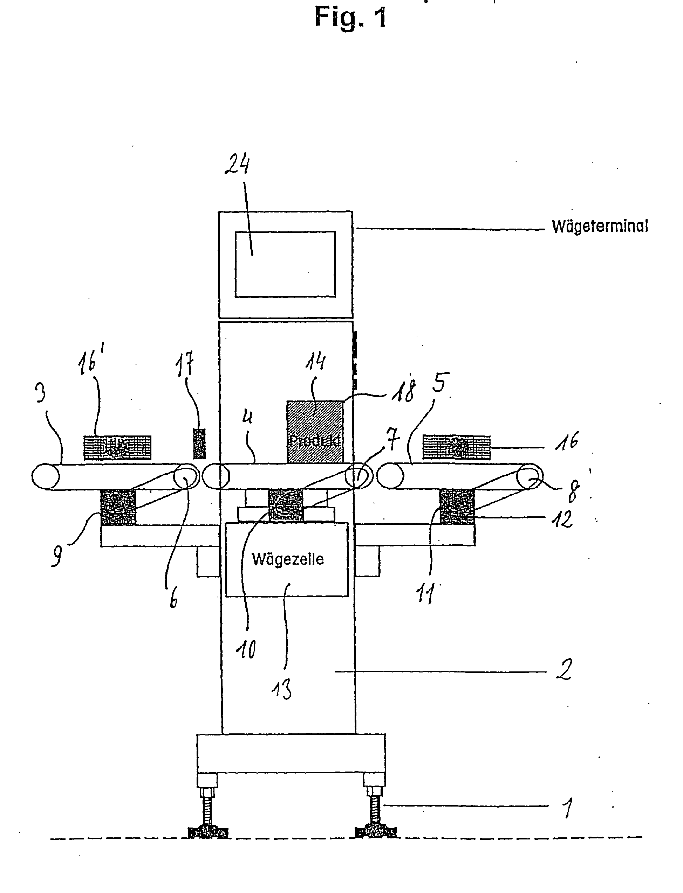

Eine in Fig. 1 schematisch dargestellte Kontrollwaage weist einen mit höhenverstellbaren Füßen 1 auf dem Boden stehenden Grundrahmen 2 auf, an dem in horizontaler Fluchtlinie hintereinander ein Zuführband 3, ein als Meßstrecke dienendes Förderband 4 und ein Abführband 5 angeordnet sind. Die drei Bänder 3, 4, 5 sind gleichsinnig und mit gleicher Geschwindigkeit umlaufend über je zwei horizontal voneinander beabstandete Rollen geführt, von denen jeweils die Rollen 6, 7 und 8 von Elektromotoren 9, 10 bzw. 11 angetrieben sind. Diese Elektromotore sind derart geregelt, daß für alle drei Bänder 3, 4, 5 die Einstellung der selben Bandgeschwindigkeit gewährleistet ist.

An mindestens einem der Elektromotore, im dargestellten Ausgangsbeispiel am Elektromotor 11 ist ein als Impulsgeber dienender Tachogenerator 12 vorgesehen, der eine Impulsfolge mit einer der Drehung der Abtriebswelle des Elektromotors proportionalen lmpulsfrequenz erzeugt. Die in einer Zeiteinheit auftretende Anzahl der Impulse des Tachogenerators 12 entspricht somit einer Transportstrecke, die jedes der Bänder 3, 4, 5 bei seinem Umlauf in dieser Zeiteinheit zurückgelegt hat.

Das als Meßstrecke dienende Förderband 4 ist auf einer an dem Grundrahmen 2 festgelegten Wägezelle 13 abgestützt. Letztere liefert mit einer vorgegebenen Frequenz, beispielsweise 1200 Hz, ihrer Belastung entsprechende Gewichtswerte. Dem als Meßstrecke dienenden Förderband 4 werden zu wiegende Produkte 14 an seinem in Bezug auf die Förderrichtung eingangsseitigen Ende von dem Zuführband 3 jeweils einzeln aufgegeben. Das als Meßstrecke dienende Förderband 4 transportiert das ihr aufgegebene Produkt 14 zu seinem in Bezug auf die Förderrichtung ausgangsseitigen Ende und übergibt es dort an das Abführband 5. Letzterem ist eine nur schematisch angedeutete Sortiervorrichtung 16, beispielsweise in Form einer Schiebevorrichtung, zugeordnet, von der fehlgewichtige Produkte 14 aussortiert werden können.

Am eingangsseitigen Ende des als Meßstrecke dienenden Förderbandes 4 ist eine Sensoreinrichtung 17 in Form einer Lichtschranke angeordnet. Diese Sensoreinrichtung 17 erfaßt jeweils den Durchtritt der Vorderkante 18 bzw. der Hinterkante 19 des Produkts 14, wenn es in der Förderrichtung durch die Lichtschranke hindurch läuft.

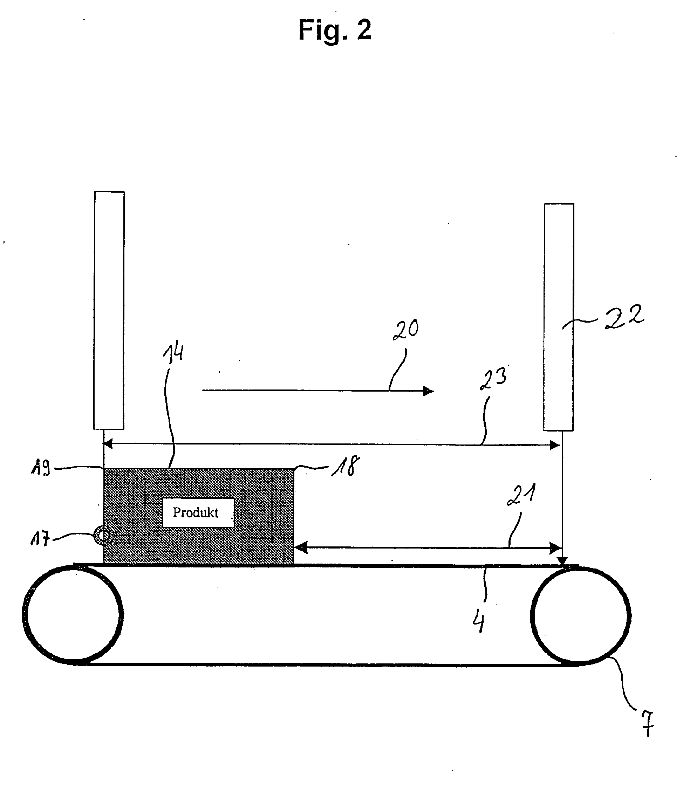

Diese Situation ist in Fig. 2 verdeutlicht, in welcher der Pfeil 20 die Förderrichtung bezeichnet. Durch das den Durchgang der Vorderkante 18 anzeigende Ausgangssignal der Sensoreinrichtung 17 wird eine Zählereinrichtung zurückgesetzt und sodann von den Impulsen des Tachogenerators 12 hochgezählt. Der jeweilige Zählwert der Zähleinrichtung gibt dadurch die von der Vorderkante 18 des Produktes 14 seit ihrem Durchtritt durch die Lichtschranke 17 auf dem Förderband 4 zurückgelegte Laufstrecke wieder. In Fig. 2 durchläuft gerade die Hinterkante 19 des Produkts 14 die Lichtschranke 17. Der dabei erreichte Zählwert der Zähleinrichtung entspricht dem Zustand, daß das Produkt 14 erstmals in voller Länge auf dem Förderband 4 aufliegt.

Zur Bildung des Wägeergebnisses aus den von der Wägezelle 13 abgegebenen Gewichtswerten werden zwei Zählwerte vorgegeben, die den Anfang und das Ende einer Teilstrecke bestimmen, die das Produkt 14 durchläuft. In Fig. 2 ist diese Teilstrecke durch einen Doppelpfeil 21 veranschaulicht. Sie ist in der in Fig. 2 veranschaulichten Situation derart gewählt, daß ihr Anfang durch die Lage der Vorderkante 18 des Produkts 14 bestimmt ist, wenn dessen Hinterkante 19 von der Sensoreinrichtung 17 erfaßt wird. Das Ende der Teilstrecke 21 liegt in Fig. 2 am ausgangsseitigen Ende des als Meßstrecke dienenden Förderbandes 4 und ist durch eine symbolische Markierung 22 gekennzeichnet. Der Abstand zwischen der Sensoreinrichtung 17 und der Markierung 22 längs der Meßstrecke ist durch einen Doppelpfeil 23 gekennzeichnet. Der Durchlauf des Produktes 14 durch die gewählte Teilstrecke ist somit dadurch bestimmt, daß der in der Zähleinrichtung hochgezählte Zählwert jeweils den den Anfang bzw. das Ende der gewählten Teilstrecke kennzeichnenden vorgegebenen Zählwert erreicht.

Die von der Wägezelle 13 während des Durchlaufs des Produkts 14 durch die gewählte Teilstrecke 21 erfaßten Gewichtswerte werden einer Filtereinrichtung zugeführt, die daraus durch Mittelwertbildung das endgültige Wägeergebnis ableitet. Zu diesem Zweck werden die von der Wägezelle 13 erfaßten Gewichtswerte fortlaufend in einen Pufferspeicher eingegeben. Der Pufferspeicher hat ein Fassungsvermögen, das ausreicht, alle während wählbarer Teilstrecken anfallenden Gewichtswerte abzuspeichern. Beispielsweise kann er derart ausgelegt sein, daß er 2000 Gewichtswerte festhalten kann. Die Einspeicherung erfolgt nach Art eines Silospeichers, in dem der Speicherinhalt fortlaufend nach Eingangsreihenfolge aktualisiert wird. Er enthält somit zu jedem Zeitpunkt jeweils den letzten von der Wägezelle 13 erfaßten Gewichtswert und alle zurückliegenden Gewichtswerte bis zur Erschöpfung seines Fassungsvermögens. Wenn der Zählwert der Zähleinrichtung den dem Ende der gewählten Teilstrecke 21 entsprechenden Zählwert erreicht, werden die während der Teilstrecke 21 angefallenen Gewichtswerte aus dem Pufferspeicher ausgelesen und der Filtereinrichtung zur Mittelwertsbildung zur Verfügung gestellt.

Im einzelnen kann dies beispielsweise dadurch geschehen, daß alle durch die hochgezählten Zählwerte ausgedrückten Laufstrecken mit Hilfe der konstanten Transportgeschwindigkeit des Förderbands in Laufzeiten umgerechnet werden. Dadurch wird eine Zeitbasis erhalten, die jeweils mit der Erfassung der Vorderkante des Produktes 14 durch die Sensoreinrichtung 17 startet. Wenn die dem durch die Markierung 22 gekennzeichneten Ende der Teilstrecke 21 entsprechende Laufzeit verstrichen ist, werden die Gewichtswerte für die der gewählten Teilstrecke 21 entsprechend zurückliegende Laufzeit aus dem Pufferspeicher an die Filtereinrichtung übergeben.

Die Kontrollwaage weist eine Eingabeeinrichtung auf, mit der der Benutzer eine Teilstrecke vorgeben kann. Beispielsweise geschieht dies durch Eingabe der nach der Erfassung der Vorderkante 18 mittels der Sensoreinrichtung 17 auftretenden Gesamtlaufzeit bis zur Erreichung des durch die Markierung 22 in Fig. 2 angedeuteten Endes der Teilstrekke, und durch die Eingabe der der Länge der gewählten Teilstrecke 21 entsprechenden Restlaufzeit. Daraufhin werden die während des Transports eines Produkts 14 über das Förderband 4 von der Wägezelle 13 erfaßten Gewichtswerte für die eingegebene Teilstrekke und für verschiedene abgewandelte Einstellungen von Teilstrecken ausgewertet. Diejenige Teilstrecke, die die geringste Standardabweichung bzw. Varianz der erfaßten Gewichtswerte liefert, wird als optimale Teilstrecke ausgewählt und für die Bildung des. Wägeergebnisses beibehalten. Die verwendeten Teilstrecken werden durch einen Zufallsgenerator-Algorithmus bestimmt und können immer wieder erneut variiert werden. Es kann eine bestimmte Anzahl von Produkten vorgegeben werden, während der die Ermittlung einer optimalen Teilstrecke durchgeführt wird.

Zur Beschleunigung der Einstellung der optimalen Teilstrecke können Beschränkungen für die verwendeten Teilstrecken vorgesehen sein. Insbesondere kann für das Ende der jeweiligen Teilstrecke ein in Bezug auf die Position der Sensoreinrichtung 17 festgelegtes Toleranzfenster vorgegeben sein. Ferner kann für die maximale Länge der Teilstrecke eine Toleranzgrenze gelten.

Mit der Veränderung der Teilstrecken kann sich der zugehörige Mittelwert ändern. Diese mit der fortlaufenden Optimierung verbundenen Mittelwertschwankungen können im Wägeergebnis rechnerisch ausgeglichen werden. Hierzu wird der aus der optimalen Einstellung berechnete Mittelwert mit einem Faktor korrigiert. Dieser Faktor kann als Quotient zwischen dem mit der zu Beginn des Optimierungsvorgangs voreingestellten Teilstrecke errechneten Mittelwert und dem mit der durch die Optimierung gefundenen Teilstrecke berechneten Mittelwert definiert werden.

Die dem vorstehend erörterten Optimierungsvorgang dienenden Komponenten, insbesondere die Filtereinrichtung, die Auswahleinrichtung mit ihrer Zähleinrichtung und der Pufferspeicher können durch ein Mikroprozessorsystem verwirklicht werden. Die Unterbringung dieser Komponenten am Grundrahmen 2 der Kontrollwaage ist in Fig. 1 schematisch unter dem Bezugszeichen 24 veranschaulicht. Diese Darstellung läßt auch erkennen, daß das Mikroprozessorsystem einen Bildschirm aufweisen kann, auf dem die verschiedenen Vorgänge und Einstellungen der Kontrollwaage dargestellt werden. Vorzugsweise wird jedoch die Filtereinrichtung durch einen getrennten Mikroprozessor verwirklicht, der in der Wägezelle 13 angeordnet ist.

In Fig. 1 ist die Transportrichtung der Produkte 14 von links nach rechts gerichtet. Es ist darauf hinzuweisen, daß die Kontrollwaage eine Ausbildung aufweisen kann, welche die Umkehr der Transportrichtung ermöglicht. In diesem Fall übernimmt das Abführband 5 die Funktion des Zuführbands 3 und umgekehrt. Dementsprechend ist in Fig. 1 an dem Zuführband 3 eine der Sortiervorrichtung 16 entsprechende Sortiervorrichtung 16' angedeutet.

### Verzeichnis der Bezugszeichen

- 1: Füße
- 2: Grundrahmen
- 3: Zuführband
- 4: Förderband
- 5: Abführband
- 6,7,8: Rollen
- 9, 10, 11: Elektromotore
- 12: Tachogenerator
- 13: Wägezelle
- 14: Produkt
- 16, 16': Sortiervorrichtung
- 17: Sensoreinrichtung
- 18: Vorderkante
- 19: Hinterkante
- 20: Förderrichtung
- 21: Doppelpfeil
- 22: Markierung
- 23: Doppelpfeil
- 24: Mikroprozessorsystem

## Patentansprüche

1. Verfahren zum Wiegen von Produkten, bei dem die Produkte einzeln einer Meßstrecke aufgegeben, längs der Meßstrecke transportiert, dabei in regelmäßigen Abständen Gewichtswerte erfaßt und zur Bestimmung des Wägeergebnisses aus den auf einer Teilstrecke erfaßten Gewichtswerten Mittelwerte und Varianzen gebildet werden, **dadurch gekennzeichnet, daß** aus einer Anzahl unterschiedlicher Teilstrecken, für deren jede die Varianz der darauf erfaßten Gewichtswerte gebildet wird, die die kleinste Varianz aufweisende Teilstrecke für die Bestimmung des Wägeergebnisses ausgewählt wird.

2. Verfahren nach Anspruch 1, **dadurch gekennzeichnet, daß** eine Teilstrecke voreingestellt und daraus die unterschiedlichen Teilstrecken durch zufällige Variationen gewonnen werden.

3. Verfahren nach Anspruch 1 oder 2, **dadurch gekennzeichnet, daß** für die unterschiedlichen Teilstrecken eine untere Schranke für den Abstand zwischen ihrem Anfang und dem Anfang der Meßstrecke vorgegeben wird.

4. Verfahren nach einem der Ansprüche 1 bis 3, **dadurch gekennzeichnet, daß** für die unterschiedlichen Teilstrecken eine obere Schranke für deren Länge vorgegeben wird.

5. Verfahren nach einem der Ansprüche 1 bis 4, **dadurch gekennzeichnet, daß** die Teilstrecken mit Hilfe der konstanten Transportgeschwindigkeit der Produkte durch eine Laufzeit längs der Meßstrecke ausgedrückt werden.

6. Verfahren nach Anspruch 3 oder 4, **dadurch gekennzeichnet, daß** die Schranken mit Hilfe der konstanten Transportgeschwindigkeit der Produkte durch eine Laufzeit längs der Meßstrecke ausgedrückt werden.

7. Vorrichtung zum Wiegen von Produkten mit einem als Meßstrecke dienenden Förderband (4), dem die Produkte einzeln aufgegeben und auf dem sie in einer Förderrichtung (20) transportiert werden, einer Wägezelle (13), auf der das Förderband (4) abgestützt ist und die in regelmäßigen Zeitabständen Gewichtswerte erfaßt, einer auf das Förderband (4) ausgerichteten Sensoreinrichtung (17), welche jeweils das beim Transport durch ihren Erfassungsbereich hindurchtretende vordere (18) und hintere (19) Ende eines Produkts (14) erfaßt, einer Filtereinrichtung und einer ihr zugeordneten Auswahleinrichtung zur Bestimmung des Wägeergebnisses aufgrund von aus auf einer Teilstrecke erfaßten Gewichtswerten gebildeten Mittelwerten und Varianzen, **dadurch gekennzeichnet, daß** von der Auswahleinrichtung aus einer Anzahl unterschiedlicher Teilstrecken, für deren jede jeweils die Varianz der darauf erfaßten Gewichtswerte gebildet wird, die die kleinste Varianz aufweisende Teilstrecke für die Bestimmung des Wägeergebnisses ausgewählt wird.

8. Vorrichtung nach Anspruch 7, **dadurch gekennzeichnet, daß** dem Förderband (4) ein eine zu dessen Transportbewegung proportionale Impulsfolge liefernder Impulsgeber (12) zugeordnet ist, sowie eine zur Zählung der Impulse der Impulsfolge dienende Zähleinrichtung, die durch das das vordere Ende (18) eines Produkts (14) erfassende Ausgangssignal der Sensoreinrichtung (17) zurückgesetzt und von den eingehenden Impulsen hochgezählt wird, wobei jeweils der Anfang und das Ende jeder Teilstrecke durch entsprechende Zählwerte der Zähleinrichtung bestimmt wird.

9. Vorrichtung nach Anspruch 8, **dadurch gekennzeichnet, daß** der den Anfang jeder Teilstrecke bestimmende Zählwert der bei der Erfassung des hinteren Endes (19) des Produktes (14) durch die Sensoreinrichtung (17) hochgezählte Zählwert ist.

10. Vorrichtung nach einem der Ansprüche 7 bis 9, **dadurch gekennzeichnet, daß** ein zur Zwischenspeicherung einer Reihe von jeweils bis zum gegenwärtigen Zeitpunkt erfaßter Gewichtswerte dienender Pufferspeicher vorgesehen ist, aus dem die der gewählten Teilstrecke entsprechenden Gewichtswerte der Filtereinrichtung zuführbar sind.

## Claims

1. Method of weighing products, in which the products are fed individually to a measuring section and conveyed along the measuring section, weight values being measured at regular intervals and mean values and variances being generated from the weight values measured on a partial section in order to determine the weighing result, **characterised in that** the partial section displaying the smallest variance is selected from a number of different partial sections for each of which the variance of the weight values measured thereon is generated in order to determine the weighing result.

2. Method according to claim 1, **characterised in that** one partial section is preset and the different partial sections are obtained therefrom by random variations.

3. Method according to claim 1 or claim 2, **characterised in that** a lower limit is preset for the distance between the start of the different partial sections and the start of the measuring section.

4. Method according to one of claims 1 to 3, **characterised in that** an upper limit is preset for the length of the different partial sections.

5. Method according to one of claims 1 to 4, **characterised in that** the partial sections are expressed in terms of a travel time along the measuring section with the aid of the constant conveying speed of the products.

6. Method according to claim 3 or claim 4, **characterised in that** the limits are expressed in terms of a travel time along the measuring section with the aid of the constant conveying speed of the products.

7. Device for weighing products, comprising a conveyor belt (4) serving as a measuring section to which the products are fed individually and on which they are conveyed in a conveying direction (20), a weighing cell (13) on which the conveyor belt (4) is supported and which measures weight values at regular intervals, a sensor device (17) aligned with the conveyor belt (4) which detects the front (18) and rear (19) ends of a product (14) passing through its sensing area during conveying, a filtering device and a selection device associated therewith for determining the weighing result on the basis of mean values and variances generated from weight values measured on a partial section, **characterised in that** the partial section displaying the smallest variance is selected by the selection device from a number of different partial sections for each of which the respective variance of the weight values measured thereon is generated in order to determine the weighing result.

8. Device according to claim 7, **characterised in that** a pulse generator (12) is associated with the conveyor belt (4) and delivers a pulse train proportional to the conveying movement thereof, and by a counter serving to count the pulses of the pulse train which is reset by the output signal of the sensor device (17) detecting the front end (18) of a product (14) and incremented by the incoming pulses, the start and the end of each partial section being determined by corresponding count values of the counter.

9. Device according to claim 8, **characterised in that** the count value determining the start of each partial section is the count value incremented when the rear end (19) of the product (14) is detected by the sensor device (17).

10. Device according to one of claims 7 to 9, **characterised by** a buffer serving for the temporary storage of a series of respective weight values measured up to the present time from which the weight values corresponding to the selected partial section can be supplied to the filtering device.

## Revendications

1. Procédé pour peser des produits, dans lequel les produits sont chargés individuellement sur un trajet de mesure, sont transportés le long du trajet de mesure, ce faisant, à des intervalles réguliers, des valeurs de poids sont détectées et, pour déterminer le résultat de la pesée, à partir des valeurs de poids saisies sur un trajet partiel, des valeurs moyennes et des variances sont formées, **caractérisé en ce qu'**à partir d'un nombre de trajets partiels différents, pour chacun desquels est formé la variance des valeurs de poids saisies sur ceux-ci, le trajet partiel présentant la plus petite variance est sélectionné pour déterminer le résultat de la pesée.

2. Procédé selon la revendication 1, **caractérisé en ce qu'**un trajet partiel est préréglé et à partir de celui-ci, les différents trajets partiels sont obtenus par des variations aléatoires.

3. Procédé selon la revendication 1 ou 2, **caractérisé en ce que** pour les trajets partiels différents, un seuil inférieur pour l'écart entre leur début et le début du trajet de mesure est prédéfini.

4. Procédé selon l'une des revendications 1 à 3, **caractérisé en ce que** pour les différents trajets partiels, un seuil supérieur pour leur longueur est prédéfini.

5. Procédé selon l'une des revendications 1 à 4, **caractérisé en ce que** les trajets partiels peuvent être exprimés à l'aide de la vitesse de transport constante des produits par temps de déplacement le long du trajet de mesure.

6. Procédé selon la revendication 3 ou 4, **caractérisé en ce que** les seuils sont exprimés à l'aide de la vitesse de transport constante des produits par temps de déplacement le long du trajet de mesure.

7. Dispositif pour peser des produits avec une bande de convoyage (4) servant de trajet de mesure, sur laquelle les produits sont chargés individuellement et sur laquelle ils sont transportés dans une direction de transport (20), une cellule de pesée (13) sur laquelle s'appuie la bande de convoyage (4) et qui détecte à des intervalles réguliers des valeurs de poids, une installation de capteur (17) orientée vers la bande de convoyage (4), qui détecte à chaque fois les extrémités avant (18) et arrière (19) d'un produit (14) passant lots du transport à travers sa zone de détection, une installation de filtration et une installation de sélection associée à celle-ci pour définir le résultat de la pesée sur la base de valeurs moyennes et de variances formées à partir de valeurs de poids détectées sur un trajet partiel, **caractérisé en ce que** l'installation de sélection sélectionne à partir d'un nombre de trajets partiels différents, pour chacun desquels est formé à chaque fois la variance des valeurs de poids détectées sur ceux-ci, le trajet partiel présentant la plus petite variance pour déterminer le résultat de la pesée.

8. Dispositif selon la revendication 7, **caractérisé en ce qu'**est associé à la bande de convoyage (4) un capteur d'impulsions (12) fournissant une séquence d'impulsions proportionnelle à son déplacement de transport, ainsi qu'une installation de comptage servant à compter les impulsions de la séquence d'impulsions, qui est remise à l'état initial par le signal de départ de l'installation de détection (17) détectant l'extrémité avant (18) d'un produit (14), et qui est incrémentée par les impulsions qui arrivent, où à chaque fois, le début et la fin de chaque trajet partiel sont définis par des valeurs de comptage correspondantes de l'installation de comptage.

9. Dispositif selon la revendication 8, **caractérisé en ce que** la valeur de comptage déterminant le début de chaque trajet partiel est la valeur de comptage incrémentée par l'installation de détection (17) lors de la détection de l'extrémité arrière (19) du produit (14).

10. Dispositif selon l'une des revendications 7 à 9, **caractérisé en ce qu'**une mémoire tampon servant au stockage intermédiaire d'une rangée de valeurs de poids détectées à chaque fois jusqu'à l'instant actuel est prévue, à partir de laquelle les valeurs de poids correspondant au trajet partiel sélectionné peuvent être transmises à l'installation de filtration.
